# EUROPEAN PATENT APPLICATION

(11) **EP 3 025 579 A1**
(43) Date of publication of application: **01.06.2016**
(21) Application number: 13889921.6
(22) Date of filing: 26.07.2013
(51) Int. Cl.: A01G 7/00, G06Q 50/02

(54) **PRODUCTION AND SUPPLY MANAGEMENT DEVICE, STOCKER, PRODUCTION AND SUPPLY SYSTEM, PRODUCTION AND SUPPLY MANAGEMENT METHOD, AND CONTROL METHOD FOR STOCKER**

(71) Applicant: Fuji Machine Mfg. Co., Ltd., Chiryu-shi, Aichi 472-8686 (JP)
(72) Inventor: ISOZUMI, Joji, Chiryu-shi Aichi 472-8686 (JP); KODAMA, Seigo, Chiryu-shi Aichi 472-8686 (JP); FUJIKAWA, Takashi, Chiryu-shi Aichi 472-8686 (JP); HOSOI, Wataru, Chiryu-shi Aichi 472-8686 (JP)
(74) Representative: Grünecker Patent- und Rechtsanwälte PartG mbB
(86) International application number: PCT/JP2013/070356
(87) International publication number: WO 2015/011831

(57) **Abstract**

In a production supply system 10, a production supply management PC 30 stores product management information 41 including a product P and a matured time at which the product P becomes mature, and obtains required information including a delivery request of the product P from a terminal of a consumer. Next, based on the required information of the consumer, the production supply management PC 30 selects the product P which is currently in production (for example, the growing state and/or the maturing state) and is appropriate for the predetermined delivery time set to be before the matured time included in the management information 41. In addition, the production supply management PC 30 outputs the product information including the information of the selected product P. In this manner, a producer can deliver the product P in the growing state or the like to a consumer. Also, the demander can grow or continue the maturing until the delivered product P reaches the matured time.

## Description

### Technical Field

The present invention relates to a production supply management device, a stocker, a production supply system, a production supply management method, and a stocker control method.

### Background Art

Conventionally, as a production supply management device, a device which generates a production plan, controls biological production according to the generated production plan, determines the difference between a biological production situation and the plan, generates production situation information when the difference exceeds an allowable range regulated in advance, and generates production plan correction information based on the production situation information, has been suggested (for example, refer to PTL 1). In this device, a tag with a bar code is provided on a cultivation base on which a plant is arranged, and by reading the tag, it is possible to obtain information, such as the position of a growing device, the cultivation starting date, or the species of the plant. In addition, as a production supply management device, a device which is provided with a non-contact type IC tag in which an assigned number is recorded in a returnable container; is provided with an IC tag reader at every entrance and exit of a collecting and shipping station, a wholesale market, and a reception destination; sends the read assigned number and a reading position to a management server; and provides merchandise information of agricultural products linked to the positional information and the assigned number as necessary, has been suggested (for example, refer to PTL 2).

### Citation List

### Patent Literature

PTL 1: JP-A-2011-34248
PTL 2: JP-A-2005-212913

### Summary of Invention

### Technical Problem

However, in the devices described in PTL 1 and PTL 2, for example, it is possible to distribute and manage harvested fresh products, but, for example, the shipping time of products with a maturation time is not considered. There are cases where consumers wish to use products with a maturation time at a more appropriate time.

In consideration of the above-described problem, a main object of the present invention is to provide a production supply management device, a stocker, a production supply system, a production supply management method, and a stocker control method which provide products with a maturation time to consumers at a more appropriate time, or allow consumers to use the products with a maturation time at a more appropriate time.

### Solution to Problem

The present invention employs the following means in order to achieve the above-described main object.

According to an aspect of the invention, there is provided a production supply management device including: storage means for storing product management information including a product with a maturation time, and a matured time at which the product becomes mature; information obtaining means for obtaining required information including a delivery request of the product from a terminal of a consumer; selecting means for, based on the obtained required information of the consumer, reading the management information, and selecting the product which is currently in production and is appropriate for a predetermined delivery time which is set to be before the matured time included in the read management information; and output control means for outputting product information including information of the selected product.

In the production supply management device, the product management information including the product and the matured time at which the product becomes mature is stored; the required information including the delivery request of the product is obtained from the terminal of the consumer; and, based on the obtained required information of the consumer, the product which is currently in production (for example, in a growing state and/or a maturing state) and is appropriate for a predetermined delivery time set to be before the matured time included in the read management information is selected. In addition, the product information including the information of the selected product is output. In this manner, for example, it is possible to deliver the product in the growing state or the maturing state to the consumer before reaching the matured time. In addition, the consumer can continue growing or maturing the product until the delivered product reaches the matured time. Therefore, it is possible to provide the product with a maturation time to the consumer at a more appropriate time. In the production supply management device, at least the information of the matured time at which the product becomes mature is included in the output product information.

### Brief Description of Drawings

[Fig. 1] Fig. 1 is a configuration view schematically illustrating a configuration of a production supply system 10 of the present invention.
[Fig. 2] Fig. 2 is a block diagram schematically illustrating the configuration of the production supply system 10.
[Fig. 3] Fig. 3 is a view illustrating an example of information stored in a storage device 40.
[Fig. 4] Fig. 4 is a flowchart illustrating an example of a product supply management routine.
[Fig. 5] Fig. 5 is a view illustrating a relationship between the growing time and the commercial value of a product.
[Fig. 6] Fig. 6 is a flowchart illustrating an example of a growing/notifying/order processing routine.

### Description of Embodiments

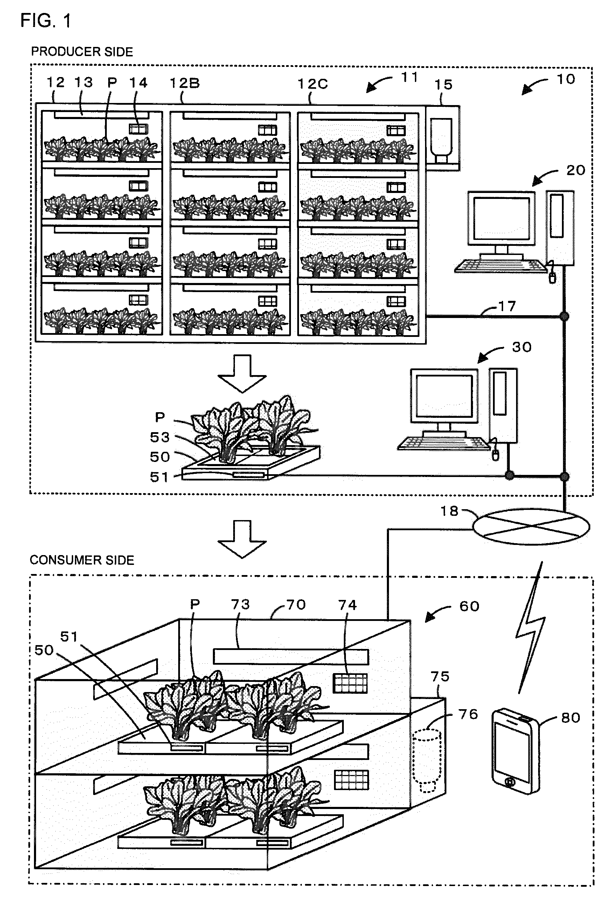

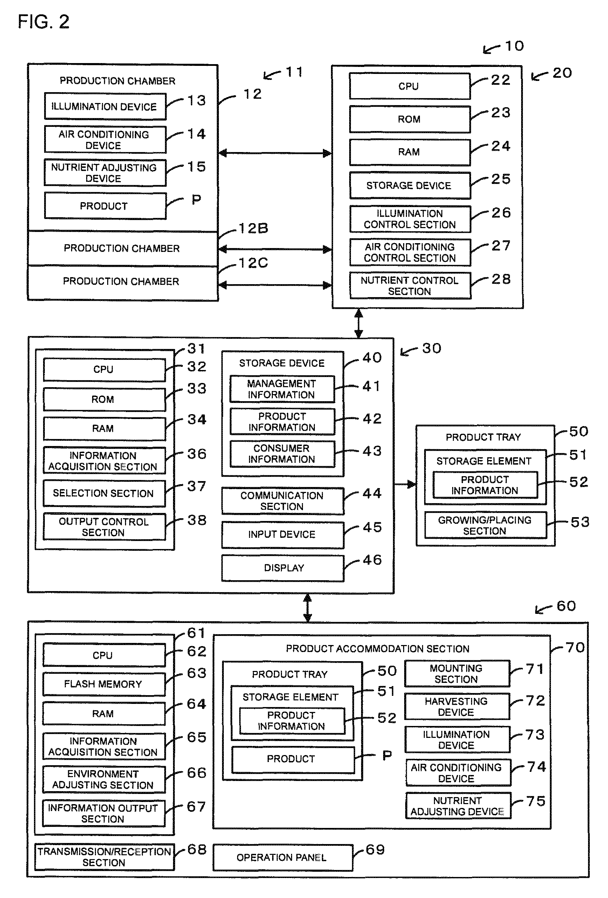

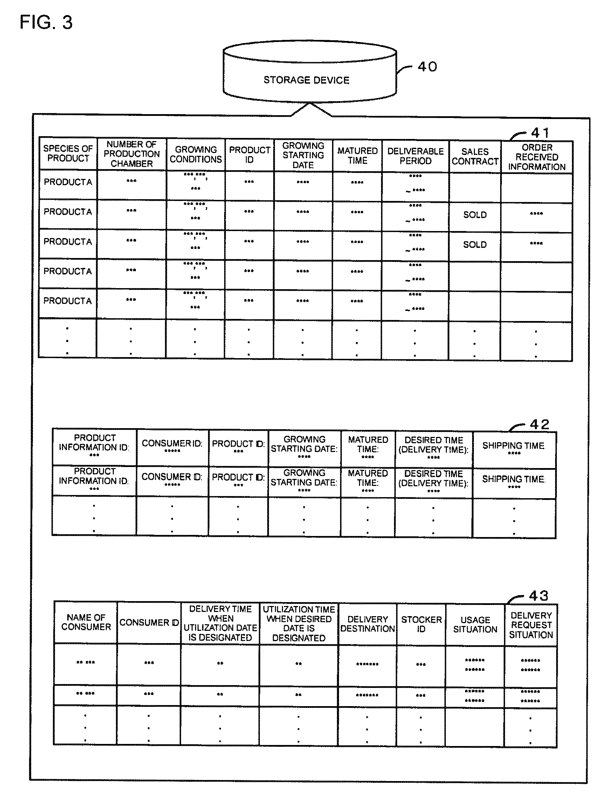

Next, an embodiment of the present invention will be described using the drawings. Fig. 1 is a configuration view schematically illustrating a configuration of a production supply system 10 according to an embodiment of the present invention. Fig. 2 is a block diagram schematically illustrating the configuration of the production supply system 10 according to the embodiment of the present invention. Fig. 3 is a view illustrating an example of information stored in a storage device 40. The production supply system 10 includes a production control personal computer (PC) 20 which controls the production environment of a production factory 11, a production supply management PC 30 which performs delivery management of a product of the production factory 11, and a stocker 60 which is used by a consumer when growing the product. The production control PC 20 and the production supply management PC 30 are connected to be communicable via a LAN 17 that serves as a network, and further, are connected to be communicable with the stocker 60 via the Internet 18. In Fig. 1, a configuration on the producer side is a range surrounded by a dotted line, and a configuration which is used on the consumer side is a range surrounded by a one-dot chain line.

The production factory 11 is configured as a factory which produces a product with a maturation time (hereinafter, simply referred to as a product) P, and is provided with one or more production chambers. The production factory 11 is provided with production chambers 12, 12B, and 12C. So long as the product P has a maturation time, it is not particularly limited, and for example, it may be a fresh product. Examples of fresh products include greens (vegetables and fruits), livestock, fish, and non-food plants (flowers). In addition, examples of products with a maturation time may include processed food, such as pickles or smoked goods. Here, the matured time means the time when commercial value of the product is highest for a product for which the commercial value increases and then decreases. For example, in the case of greens, the matured time means the time when the greens are in a ripened state. In addition, in case of livestock and fish, the matured time means the time when the livestock or fish are in a state of having been appropriately grown. Hereinafter, the production factory 11 will be described as a factory where the greens (for example, vegetables) are produced. Note that, since the production chambers 12, 12B, and 12C are configured in a similar manner, only the production chamber 12 will be described.

In the production chamber 12, an illumination device 13 which emits light required for growing the products P which are the greens, an air conditioning device 14 which adjusts temperature and humidity of the environment of product P, and a nutrient adjusting device 15 which adjusts water and nutrients required for growing the product P, are installed. In the production chamber 12, multi-level growing shelves on which multiple products P are grown are vertically arranged. Each of the products P is linked with identification information, such that the growing starting date or the like thereof can be ascertained. The illumination device 13 is configured of, for example, a light source which can appropriately adjust a quantity of light and a wavelength of the light, and is installed to be capable of emitting the light across substantially the entire surface of the growing shelf at each level. The air conditioning device 14 is a device which adjusts the temperature and the humidity of the inside of the production chamber 12, and is provided with an air blowing port which blows air, of which the temperature and the humidity have been adjusted, into each growing shelf. The nutrient adjusting device 15 is a device which is provided with multiple culture fluid tanks that correspond to growing situations of the products P, and supplies culture fluid in which culture ingredients are dissolved to each product P via a pipe, which is not illustrated, from the culture fluid tank. In the production factory 11, by controlling the illumination device 13, the air conditioning device 14, and the nutrient adjusting device 15, the growing period or the like of the product P is adjusted.

The production control PC 20 is a PC which is connected to the LAN 17, and controls each device of the production factory 11. As illustrated in Fig. 2, the production control PC 20 includes a CPU 22 which performs each processing, a ROM 23 which stores a processing program, a RAM 24 which is used as a work region, a storage device 25, such as an HDD that stores various types of programs or various types of data files. In addition, the production control PC 20 is provided with a communication section which communicates with external equipment, an input device, such as a keyboard or a mouse, through which an operator inputs various types of instructions, and a display which displays various types of information. The configuration elements are connected to each other via a bus. The production control PC 20 has a function of performing an operation which corresponds to an input operation when the operator operates a cursor or the like displayed on the display via the input device. The production control PC 20 is provided with an illumination control section 26, an air conditioning control section 27, and a nutrient control section 28, as a functional block of a controller. The illumination control section 26 has a function of controlling the quantity of light and the wavelength of the light of the illumination device 13 in the production factory 11 based on production conditions set according to the production plan, the production situation, and the situation required by the consumer. The air conditioning control section 27 has a function of controlling the air volume, the temperature, and the humidity of the air conditioning device 14 based on the production conditions. The nutrient control section 28 has a function of controlling the type, the amount, and the concentration of the culture fluid of the nutrient adjusting device 15 based on the production conditions.

The production supply management PC 30 is a device which is configured as a production supply management device of the present invention, and performs management of orders received, delivery, and stock of the products P produced in the production factory 11. The production supply management PC 30 is provided with a controller 31 which controls the entire device, the storage device 40 which stores various types of applications or various types of data files, and a communication section 44 which performs communication with equipment connected to the LAN 17. In addition, the production supply management PC 30 is provided with an input device 45, such as a keyboard or a mouse, through which the operator inputs various types of instructions, and a display 46 which displays various types of information. The configuration elements are connected to each other via a bus. The production supply management PC 30 has a function of performing the operation which corresponds to the input operation when the operator operates the cursor or the like displayed on the display 46 via the input device 45. The controller 31 is configured as a microprocessor based around a CPU 32, and is provided with a ROM 33 which stores the processing program, and a RAM 34 which is used as the work region.

In addition, the controller 31 is provided with an information acquisition section 36, a selection section 37, and an output control section 38, as a function block. The information acquisition section 36 has a function of obtaining required information including a delivery request of the product P from a terminal of the consumer, such as the stocker 60 or mobile equipment 80, via the internet 18. The information acquisition section 36 obtains the required information at least including a consumer ID (identification information) which specifies the consumer, and a product ID (specification information) which specifies the product P. At this time, the information acquisition section 36 obtains the required information including at least one of a utilization time at which the consumer will use the product P, and a desired delivery time at which the consumer desires the delivery of the product P and which is set to be before the utilization time. The selection section 37 has a function of reading management information 41 based on the required information of the consumer obtained by the information acquisition section 36, and selecting the product P which is currently in production and is appropriate for the predetermined delivery time which is set to be before the matured time included in the read management information 41. The "product which is currently in production" may be a product being grown before harvesting. Here, in the production supply system 10, the consumer can designate in advance a predetermined time (for example, seven days) before the utilization time, at which the product P is to be used, as the delivery time (refer to consumer information 43 of Fig. 3). Alternatively, in the production supply system 10, the consumer can designate in advance a predetermined time (for example, seven days) after the desired delivery time, at which the consumer desires the delivery of the product P, as the utilization time. The selection section 37 selects the product P which has a matured time that is appropriate for the utilization time which is included in the obtained required information and at which the consumer will use the product P, and which has not been sold. Or, the selection section 37 selects the product P which has a delivery time that is appropriate for the desired delivery time which is included in the obtained required information and at which the consumer desires the delivery, and which has not been sold. Note that, each of the utilization time, the desired delivery time, the delivery time, and the matured time may be set as a date, a date and a time slot (morning or the like), or a date and time (7 o'clock or the like).

The output control section 38 has a function of outputting product information including the information of the product P selected by the selection section 37 to the storage device 40, the display 46, the stocker 60, and the mobile equipment 80. The output control section 38 outputs the product information which includes at least information of the matured time at which the product P becomes mature, and which further includes the consumer ID (identification information) that specifies the consumer, and the production ID (specification information) which specifies the selected product P. The output control section 38 outputs shipping instruction information before the delivery time so that the product P is delivered in a growing state and/or a maturing state at the delivery time which is set to be ahead of the matured time. In addition, the output control section 38 outputs the product information to a storage element 51 which is attached to at least one of the product P in the growing state and/or a maturing state, and a product tray 50 (carrying member) on which the product P in the growing state and/or the maturing state is placed. Further, the output control section 38 may store the management information 41 in which the product information is stored as order received information in the storage device 40. In addition, the output control section 38 outputs change information which changes at least one of the growing state, the maturing state, and the holding state of the product P, in accordance with the production situation in the production factory 11 and the required situation from the user. At this time, the output control section 38 outputs the change information to the production control PC 20 (production control device) which controls the production processing of the product P in the production factory 11. Note that, the "holding state" means a state where the growing or the maturing is stopped, or a state where the speed of the growing or the maturing is reduced. When the information acquisition section 36 obtains use completion information showing that the product P has been used from the terminal of the consumer, the output control section 38 stores the use completion information in the storage device 40, and outputs the information regarding the delivery of the next product P to the terminal of the consumer. This processing will be described in detail later.

The storage device 40 is configured as a device which stores data to be rewritable, such as an HDD or a flash memory. As illustrated in Fig. 3, the storage device 40 stores, for example, the management information 41 of the product which includes the product ID of the product P, and a matured time at which the product P becomes mature. Further, in the management information 41, the type of the product, the number of production chamber in which the product is produced, the growing conditions of the product P, the growing starting date, the deliverable time, sales contract information, order received information including the information regarding the consumer who placed the order or the delivery time, and the like, are linked with each product. For example, the deliverable time is set to be the time obtained by adding a predetermined period (for example, two days or the like) to the matured time in accordance with each corresponding type of the products. In addition, for example, the storage device 40 stores product information 42 including a product information ID which is the information that identifies the product information, the consumer ID which specifies the demander, the product ID which specifies the selected product P, and the information regarding the matured time at which the product P becomes mature. In the product information 42, furthermore, the information regarding the growing starting date, the desired delivery time (delivery time), the shipping time and the like are respectively linked with the product P. The shipping time is determined by adding a transporting to the consumer period to the delivery time. In addition, the storage device 40 stores the consumer information 43 which is the information regarding the consumer. In the consumer information 43, for example, the name of the consumer, the consumer ID, the information regarding the delivery time designation when designating the utilization time, the information regarding the utilization time designation when designating the desired delivery time, the delivery destination address, the ID of the stocker 60 used by the consumer, the usage situation of the stocker 60, the information regarding the delivery request situation of the next product P and the like are respectively linked with the product P. The production supply management PC 30 performs production management by using the management information 41, the product information 42, and the consumer information 43.

The product tray 50 is a flat box-shaped member, and is a tray on which the product P is placed in a state with roots (in the growing state and/or the maturing state). The product tray 50 functions as both a carrying tray when the product P is carried to the consumer from the production factory 11, and a growing tray when the product P is being grown in the stocker 60. The product tray 50 is provided with the storage element 51 which stores the information, and a growing/placing section 53 on which one or more products P are placed. The storage element 51 is an element on which writing and removal of data is performed by non-contact communication or a connection such as a USB. The storage element 51 stores product information 52 which is the information regarding the placed product P. The product information 52 houses information which is similar to the product information 42 (refer to Fig. 3). The growing/placing section 53 is configured as a container which accommodates the water or the culture fluid supplied from the outside, and can fix the product P in the growing state and/or the maturing state.

The stocker 60 is configured as a growing and storage house which is used by the consumer, which can adjust at least one of the growing state, the maturing state, and the holding state of the product P, and can accommodate the product P until the matured time. The stocker 60 is provided with a controller 61 which controls the entire device, a transmission/reception section 68 which is connected to the network and sends and receives data to and from the external equipment, an operation panel 69 which inputs various types of instructions and displays various types of information, and one or more product accommodation sections 70 which accommodate the product P. As illustrated in Fig. 2, the controller 61 is configured as a microprocessor based around a CPU 62, and is provided with a flash memory 63 which stores a processing program, and a RAM 64 which is used as the work region. The controller 61 has a clock function, and keeps track of the date and time. In the flash memory 63, a stocker ID which is an identifier that specifies the stocker 60, and a user ID which is identification information that specifies the user are stored, in addition to the information regarding the product P that is being grown in the product accommodation section 70.

The controller 61 is provided with an information acquisition section 65, an environment adjusting section 66, and an information output section 67, as a functional block. The information acquisition section 65 has a function of obtaining the product information 52 including the information regarding the product P accommodated in the product accommodation section 70 via the storage element 51 or the internet 18. The environment adjusting section 66 has a function of adjusting the environment of the product accommodation section 70 so as to adjust at least one of the growing state, the maturing state, and the holding state of the product P based on the obtained product information 52. When adjusting the environment of the product accommodation section 70, the environment adjusting section 66 controls an illumination device 73, an air conditioning device 74, and a nutrient adjusting device 75 of the product accommodation section 70. The information output section 67 has a function of sending the use completion information showing that the product P has been used to the production supply management device which performs the delivery management of the production supply management PC 30 when the product P accommodated in the product accommodation section 70 is used. The information output section 67 sends the use completion information showing that the product P has been used to the production supply management PC 30 when the product tray 50 is detached from a mounting section 71 of the product accommodation section 70. In addition, the information output section 67 sends the use completion information showing that the product P has been used to the production supply management PC 30 after a harvesting device 72 of the product accommodation section 70 is operated.

The transmission/reception section 68 is configured as an interface which performs exchange of information with external equipment connected by a network or the like, sends the information to the Internet 18, and receives the information from the Internet 18. Using the transmission/reception section 68, the stocker 60 functions as the terminal of the consumer which is used by the consumer. The operation panel 69 is provided with a display section which displays a screen, and an operation section which receives input operations from the consumer. The display section is configured as a liquid crystal display, and displays an operation state of the stocker 60 or the information regarding the product P on the screen. The operation section is provided with cursor keys which move the cursor vertically and horizontally, a cancel key which cancels the input, a determination key which determines selection contents, and the like, and is configured so that instructions of the consumer can be inputted through the keys.

The product accommodation section 70 is provided with the mounting section 71 on which the product tray 50 can be mounted and detached, and the harvesting device 72 which harvests the product P placed on the product tray 50. In addition, in the product accommodation section 70, the illumination device 73 which emits the light required for growing the product P, the air conditioning device 74 which adjusts the temperature and the humidity environment of the product P, and the nutrient adjusting device 75 which adjusts the water and the nutrients required for growing the product P, are installed. The mounting section 71 has a contact type or a non-contact type sensor installed therein, and can detect the mounting and the detaching of the product tray 50. In addition, the mounting section 71 is provided with an input/output interface, and performs exchange of information with the storage element 51. The harvesting device 72 is provided with a cutter which cuts out a root part of the product P, a moving mechanism which moves the cutter, and a motor which drives the moving mechanism. The illumination device 73 is configured of a light source which can appropriately adjust the quantity of light and the wavelength of the light. The air conditioning device 74 is a simple device which adjusts the temperature and the humidity of the inside of the product accommodation section 70, and is provided with a temperature sensor and an air blowing fan. The nutrient adjusting device 75 is a device which is provided with multiple culture fluid cartridges 76 which correspond to the growing situation of the product P, and which supplies the culture fluid in which the culture ingredients are dissolved to the growing/placing section 53 via a pipe from the culture fluid cartridges 76. The product accommodation section 70 controls the growing of the product P by controlling the illumination device 73, the air conditioning device 74, the nutrient adjusting device 75 and the like.

Note that, the above-described functional block may be realized by the controller executing software, or may be realized in the form of hardware by using a circuit or the like.

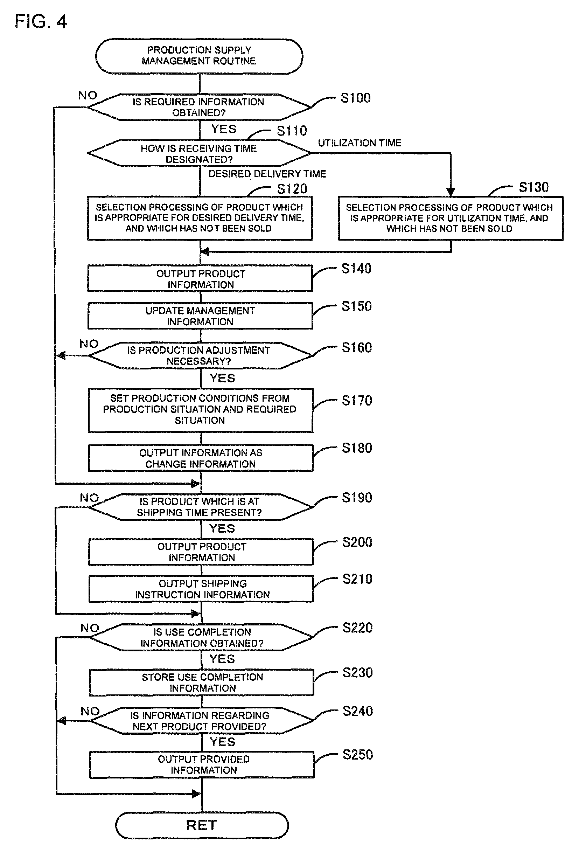

Described next are operations of the production supply system 10 according to the embodiment configured in this manner, first, processing in which the production supply management PC 30 performs the production management, the order received management, and the delivery management of the product P. Fig. 4 is a flowchart illustrating an example of a product supply management routine. The routine is stored in the storage device 40 of the production supply management PC 30, and is repeatedly executed at a predetermined timing. The CPU 32 executes the routine by using the functions of the information acquisition section 36, the selection section 37, and the output control section 38. When starting the routine, first, the CPU 32 of the controller 31 determines whether the required information from the consumer has been obtained (step S100). As described above, in the required information, at least the demander ID and the product ID which specifies the product P are included, and one of the utilization time and the desired delivery time is included.

Next, the CPU 32 checks the designation of the receiving time of the product P (step S110). For example, the designation of the receiving time is determined by whether the utilization time at which the consumer will use the product P has been designated in the required information, or whether the desired delivery time at which the consumer desires the delivery of the product P has been designated in the required information. When the receiving time is designated by the desired delivery time, the CPU 32 performs the processing of selecting the product P which is appropriate for the desired delivery time, and which has not been sold (step S120) . This processing will be described hereinafter. First, the CPU 32 reads the designation information of the utilization time when designating the desired date based on the demander ID from the demander information 43. Next, the CPU 32 selects the product P for which the virtual time obtained by adding the designated predetermined time (for example, seven days) to the desired delivery time, and the matured time registered in the management information 41, match each other, and which has not been sold. In the selection processing, the product P for which the acquired virtual time is included in the deliverable period is selected. Note that, the selection processing may select the product P for which the time obtained by adding the predetermined period (for example, two days or the like) to the virtual time matches the matured time.

On the other hand, if the receiving time is designated as the utilization time in step S130, the CPU 32 performs processing of selecting the product P which is appropriate for the utilization time, and which has not been sold (step S130). At this time, the CPU 32 selects the product P for which the utilization time and the matured time registered in the management information 41 are compatible, and which has not been sold. Note that, the selection processing may be processing to check the compatibility between the matured time and the utilization time to which a predetermined period (for example, two days or the like) has been added. In addition, the CPU 32 reads the designation information of the delivery time when the utilization date is designated that corresponds to the consumer ID from the consumer information 43, and acquires the desired delivery time (that is, the delivery time) by subtracting the designation of the predetermined time (for example, seven days) from the utilization time. In this manner, the CPU 32 acquires the desired delivery time and the utilization time of the consumer.

After step S130, or after step S120, the CPU 32 outputs the product information to the display 46 and the storage device 40 (step S140), and updates the management information 41 (step S150). The outputted product information houses the product information ID, the consumer ID of the orderer, the selected product ID, the growing starting date and the matured time (planned) of the product, the desired delivery time (delivery time), and the like. The CPU 32 registers the sales contract information in the management information 41, and registers the product information in the management information 41 as the order received information. In addition, the CPU 32 performs processing of storing the product information 42 in the storage device 40.

Next, the CPU 32 determines whether production adjustment is necessary (step S160). In the determination processing, it is determined whether the number of sales contracts of the product P which matures within the predetermined period exceeds a predetermined threshold value. For example, in the production factory 11, the product P which can be harvested during a given fixed period is determined by the number of the products P of which the growing has started. Also, in the production factory 11, by adjusting the growing environment of the production chamber 12, it is possible to adjust the harvesting timing. This means that the production adjustment means adjusts the number of products P that mature around a given time in accordance with the number of sales contracts of the product P to be harvested during the given fixed period. The predetermined threshold can be empirically set, for example, to be a value which is 80% or 90% of the number of products P that mature within the predetermined period. When it is determined that the production adjustment is required, the CPU 32 sets the production conditions based on the production situation and the required situation (step S170), and outputs the set production conditions to the production control PC20 as the change information (step S180). For example, when the number of sales contracts of the products P that mature within a second period is large, the CPU 32 sets the production conditions in which the growing of a part or the entirety of the products P that mature within a first period before the second period is delayed, or sets the production conditions in which the growing of a part or the entirety of the products P that mature within a third period after the second period is brought forward. The production conditions can be empirically acquired. For example, the growing states of the greens which are the products P are adjusted by changing the wavelength of the light, the temperature, or the type of nutrients. The production control PC 20 which receives the change information output from the production supply management PC 30 controls the illumination device 13, the air conditioning device 14, and the nutrient adjusting device 15 so as to adjust the environment of each production chamber based on the production conditions of the change information.

If the required information is not obtained after step S180 or in step S100, or if the production adjustment is not required in step S130, the CPU 32 determines whether the product P of the shipping time is present (step S190). This determination can be performed by reading the shipping time of the product information 42. When the product P of the shipping time is present, the CPU 32 outputs the product information 42 corresponding to the product P to the storage element 51 (step S200), and outputs the shipping instruction information to the display 46 so that the product P is delivered in the growing state and/or the maturing state at the delivery time (step S210). The operator confirms the shipping instruction information, and performs work of moving the corresponding product P to the product tray 50 in which the product information 52 is stored in the storage element 51. Then, the product P is placed on the product tray 50, and the product P in the growing state and/or the maturing state is sent and delivered to the consumer.

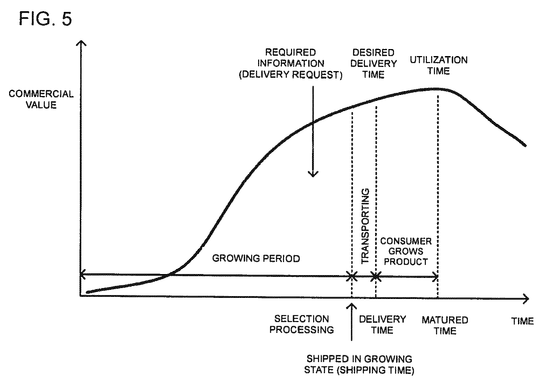

Fig. 5 is a view illustrating a relationship between the growing time and the commercial value of the product. As illustrated in Fig. 5, in the production supply system 10, when the demander designates the products P, the desired delivery time, or the utilization time, and places an order for the product P, the products P in the growing state and/or the maturing state which are appropriate for the delivery time which is set to be before the matured time, are sent and delivered to the consumer. The consumer can continue to grow the products P in the stocker 60 until the utilization time, and use the products P in a high state of freshness.

If the product of the shipping time is not present after step S210 or in step S190, the CPU 32 determines whether the use completion information has been obtained from the consumer (step S220). The use completion information is information output by the stocker 60, and for example, when the product tray 50 is detached from the mounting section 71, the use completion information houses information indicating that all of the products P placed on the product tray 50 have been used. In addition, for example, when the harvesting device 72 is operated, the use completion information houses information indicating that the products P at positions at which operation was performed have been used, from which the quantity of products P used is also understood. If the use completion information is not obtained, the CPU 32 finishes the routine as is. Meanwhile, if the use completion information is obtained, the CPU 32 stores the contents of the use completion information in the consumer information 43 (step S230), and determines whether the information that forms the order of the next product is to be provided (step S240). Here, for example, when the number of products P remaining in the stocker 60 is lower than a predetermined number, it may be determined that the information is to be provided. When it is determined that the information regarding the next product is to be provided, the CPU 32 outputs the information to be provided to the corresponding stocker 60 (step S250), and finishes the routine as is. The provided information, for example, may be a message, such as "Do you wish to order * products P?". The stocker 60 which receives this message displays the message on the operation panel 69. When the confirmation that the consumer has placed an order of the next product P is input, the stocker 60 outputs the required information. In this manner, the production supply management PC not only performs the setting of the production conditions of the products P, the shipping, the delivery, and the stock management, but also provides the information to the consumer.

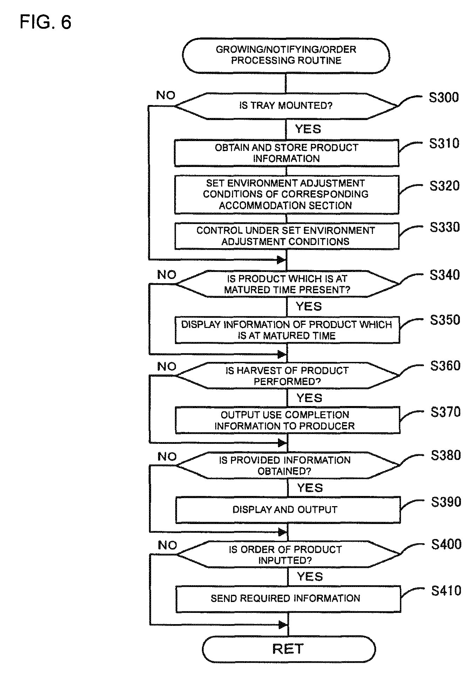

Next, the processing in which the stocker 60 grows the product P and performs the use management will be described. Fig. 6 is a flowchart illustrating an example of a growing/notifying/order processing routine. The routine is stored in the flash memory 63 of the stocker 60, and repeatedly executed at a predetermined timing. The CPU 62 executes the routine by using the functions of the information acquisition section 65, the environment adjusting section 66, and the information output section 67. When the routine is started, first, the CPU 62 of the controller 61 determines whether the product tray 50 is mounted in the mounting section 71 (step S300). If the product tray 50 is mounted, the CPU 62 obtains the product information 52 stored in the storage element 51, and stores the product information 52 in the flash memory 63 (step S310). Next, the CPU 62 sets environment adjustment conditions of the mounted product accommodation section 70 based on the obtained product information 52 (step S320) . For example, the environment adjustment conditions set are the conditions of the illumination device 73, the air conditioning device 74, and the nutrient adjusting device 75, and the conditions are set from the information regarding the growing starting date and the matured time of the product information 52 so that the product P matures at the matured time. The environment adjustment conditions can be empirically acquired. In the production supply system 10, since the delivery time and the matured time are set based to a certain degree on the production conditions of the production factory 11, the environment adjustment conditions which correspond to these production conditions may be set. Next, the CPU 62 adjusts the environment of the product accommodation section 70 based on the set environment adjustment conditions (step S330).

If the product tray 50 is not mounted after step S330 or in step S300, the CPU 62 determines whether the product P which has reached the matured time is present (step S340) . This determination can be performed based on the matured time of each product P stored in the flash memory 63 and the current date. When the product P which has reached the matured time is present, the CPU 62 displays and outputs the information indicating that the corresponding product P has reached the matured time onto the operation panel 69 (step S350) . A consumer who has confirmed this operates the harvesting device 72 and harvests the corresponding product P, or detaches the corresponding product tray 50. The harvested product P is used, such as being cooked by the consumer.

If the product P which reached the matured time is not present after step S350 or in step S340, the CPU 62 determines whether the harvest of the product P has been performed (step S360). For example, if the harvesting device 72 was operated, it is determined that the product P at the operated positions has been harvested, and if the product tray 50 was detached, it is determined that all of the products P placed on the product tray 50 have been harvested. If the harvest of the product P has been performed, the CPU 62 sends the information of the used product P to the production supply management PC 30 as the use completion information (step S370). The production supply management PC 30 obtains the use completion information in the above-described step S220.

If the product P is not harvested after step S370 or in step S360, the CPU 62 determines whether the provided information has been obtained from the production supply management PC 30 (step S380). If the provided information has been obtained, the CPU 62 displays and outputs the provided information to the operation panel 69 (step S390). A consumer who confirms this considers purchase of the next product P. If the provided information is not obtained after step S390 or in step S380, the CPU 62 determines whether the order of the product P has been inputted based on the input of the consumer (step S400). The consumer designates, for example, the utilization time and the product P, or designates the desired delivery time and the product P, as the input order of the product P by operating the operation panel 69. If the order of the product P is not inputted, the CPU 62 finishes the routine as is. Meanwhile, if the order of the product P is inputted, the CPU 62 sends the input order and the input contents to the production supply management PC 30 as the required information (step S410), and finishes the routine as is. As described above, in the required information, at least the consumer ID and the product ID which specifies the product P are included, and one of the utilization time and the desired delivery time is included. The production supply management PC 30 obtains the required information in the above-described step S100.

Next, the correspondence between the configuration elements of the embodiment and the configuration elements of the present invention will be made apparent. The storage device 40 of the embodiment corresponds to storage means of the present invention, the information acquisition section 36 corresponds to information obtaining means, the selection section 37 corresponds to selection means, the output control section 38 corresponds to output control means, and the product tray 50 corresponds to a carrying member. In addition, the product accommodation section 70 corresponds to an accommodation section, the information acquisition section 65 corresponds to an information acquisition section, the environment adjusting section 66 corresponds to adjustment means, the transmission/reception section 68 corresponds to sending means, the mounting section 71 corresponds to a mounting section, and the harvesting device 72 corresponds to a harvesting section. An example of a production supply management method of the present invention is made apparent by describing the operation of the production supply management PC 30 in the embodiment. Also, an example of a stocker control method of the present invention is also made apparent by describing operation of the stocker 60.

According to the production supply system 10 of the above-described embodiment, the production supply management PC 30 stores the management information 41 of the product which includes the product P and a matured time at which the product P becomes mature, and obtains the required information including the delivery request of the product P from the terminal of the consumer. Next, based on the required information of the consumer, the production supply management PC 30 selects the product P which is currently in production (for example, in the growing state and/or the maturing state) and is appropriate for the predetermined delivery time which is set to be before the matured time included in the management information 41. Then, the production supply management PC 30 outputs the product information including the information of the selected product P. In this manner, for example, it is possible to deliver the product P in the growing state or the maturing state to the consumer before the product P reaches the matured time. In addition, the demander can grow and continue the maturing until the delivered product P reaches the matured time. Therefore, it is possible to provide the product P with a maturation time to the consumer at a more appropriate time.

In addition, since the output control section 38 outputs the shipping instruction information before the delivery time so that the product P is delivered in the growing state and/or the maturing state at the delivery time set before the matured time, it is possible to more reliably provide the product with a maturation time to the consumer at a more appropriate time, thanks to the shipping instruction information. Further, since the output control section 38 outputs the product information including the consumer ID (or the stocker ID) which specifies the consumer, the product ID which specifies the product, and the information regarding the matured time of the product P, it is possible to, for example, deliver the product by using this information. Further, since the information acquisition section 36 obtains the required information which further includes the consumer ID (or the stocker ID) that specifies the consumer, the product ID that specifies the product, and any of the utilization time and the desired delivery time, it is easy to select the appropriate product by using the information.

In addition, the selection section 37 selects the product P which has a matured time that is compatible with the utilization time included in the obtained required information, and which has not been sold. Otherwise, the selection section 37 selects the product P which has delivery time that is compatible with the desired delivery time included in the obtained required information, and which has not been sold. In this manner, it is possible to select the product P. Further, since the output control section 38 outputs the product information to the storage element 51 which is attached to the product tray 50 on which the product P in the growing state and/or the maturing state is placed, the product information is stored in the member which is closely related to the product P, and thus, it is possible to more reliably link the product P and the information thereof with each other, and to more reliably provide the product to the consumer. Further, since the output control section 38 stores the management information 41 in which the product information is registered as the order reception information in the storage device 40, it is easy to perform the production management and the order reception management of the product P. In addition, the output control section 38 outputs the change information which changes at least one of the growing state, the maturing state, and the holding state of the product P in accordance with the production situation in the production factory 11 and the required situation from the consumer. For this reason, since it is possible to change the production situation of the product P by using the output change information, it is easy to correspond to the requirements of the consumer, and to provide the product to the consumer at a more appropriate time. At this time, since the output control section 38 outputs the change information to the production control PC 20 which controls the production processing of the product P in the production factory 11, it is possible to use the change information in the production control PC 20, and it is easy to change the production situation of the product P.

In addition, since the required information is obtained via the internet 18 which serves as the network from the stocker 60 which serves as the terminal of the consumer, it is easy for the consumer to output the required information in accordance with consumption situation of the product P. Further, for example, it is possible to grow, mature, or hold the product P until the matured time on the demander side after the product P which has not been harvested is delivered, by using the stocker 60, such that the consumer can use the product with a maturation time at a more appropriate time. Further, when the information acquisition section 36 obtains the use completion information showing that the product P has been used from the terminal of the consumer, the output control section 38 stores the use completion information in the storage device 40, and outputs the provided information related to the delivery of the next product P to the terminal of the consumer. For this reason, it is possible to continually provide the product P to the consumer at a more appropriate time.

In addition, the stocker 60 is provided with the product accommodation section 70 which accommodates the product P, obtains the product information 52 including the information regarding the product P from the storage element 51, and adjusts the environment of the product accommodation section 70 so as to control the state of the product P based on the obtained product information 52. For this reason, the consumer can use the product P with a maturation time at a more appropriate time. Further, when the product P accommodated in the product accommodation section 70 is used, the transmission/reception section 68 sends the use completion information indicating that the product P has been used to the production supply management PC 30; therefore, it is possible to ascertain the consumption state of the consumer by the production supply management PC 30. Further, since the transmission/reception section 68 sends the use completion information indicating that the product P has been used when the product tray 50 is detached from the mounting section 71 to the production supply management PC 30, it is possible to ascertain the consumption state of the consumer by the production supply management PC 30. In addition, since the transmission/reception section 68 sends the use completion information showing that the product P has been used to the production supply management PC 30 after the harvesting device 72 is operated, it is possible to ascertain the consumption state of the consumer by the production supply management PC 30.

In addition, in the production supply system 10, since the consumer uses the product P grown on the consumer side, for example, it is advantageous in that the product P provided to the consumer is fresher than the product P harvested in the production factory 11, and a preservation/consumption period can be extended. In addition, compared to a case where the product is conserved in a refrigerator, it is possible to further suppress withering or deterioration of freshness. Further, since harvesting is not performed in the production factory 11, it is possible to reduce the number of processes and members used for harvesting and packing and the like. Further, since the product tray 50 on which multiple products P can be placed is used, for example, it is possible to ship multiple types of goods which are necessary for a menu, such as a salad, by one tray, such that the entire tray is used. In addition, since the producer can receive the order and deliver the product P before the matured time of the product P, it is easy to adjust the production of the product P.

Note that, the present invention is not limited to the above-described embodiment, and it is needless to say that the present invention can be performed by various aspects which are included in the scope of the present invention.

For example, in the above-described embodiment, the production supply management PC 30 can designate in advance a predetermined time before the utilization time at which the product P is to be used as the delivery time, but this process may be omitted. Otherwise, the production supply management PC 30 can designate in advance a predetermined time after the desired delivery time at which the consumer desires the delivery of the product P as the utilization time, but this process may be omitted. At this time, the production supply management PC 30 may obtain the required information including the utilization time and the desired delivery time. In this manner too, it is possible to obtain the effects similar to those of the above-described embodiment.

In the above-described embodiment, the production supply management PC 30 stores the product information 52 in the storage element 51 attached to the product tray 50, but the invention is not particularly limited thereto. For example, the product information 52 may be stored in the storage element 51 attached to the product P. In this manner too, it is possible to obtain the effects similar to those of the above-described embodiment. Otherwise, the product information may be output to the stocker 60 via the internet 18. In the stocker 60, when obtaining the product information via the network, the information acquisition section 65 may obtain the product information based on the product ID (specification information) which specifies the product P accommodated in the product accommodation section 70. In this manner too, it is possible to provide the product P with a maturation time to the consumer at a more appropriate time.

In the above-described embodiment, the output control section 38 stores the management information 41 in which the product information is registered as the order received information in the storage device 40, but the invention is not particularly limited thereto, and this processing may be omitted. In addition, in the above-described embodiment, the output control section 38 outputs the shipping instruction information, but this process may be omitted.

In the above-described embodiment, the production supply management PC 30 outputs the change information to the production control PC 20, but, for example, the production supply management PC 30 may display and output the change information to the display 46, or may print and output the change information. In this manner too, it is possible to change the production conditions in the production factory 11 by an operator who has confirmed the change information. Otherwise, creating or outputting the change information may be omitted. In this manner too, it is possible to provide the product P with a maturation time to the consumer at a more appropriate time. In addition, the production factory 11 is described as a factory in which the production control PC 20 automatically adjusts the production environment of the product P, but the invention is not limited thereto, and an operator may adjust the production environment of the product P.

In the above-described embodiment, the required information is obtained via the network from the stocker 60, but the invention is not limited thereto, and the required information may be obtained from the terminal of the consumer, such as the mobile equipment 80 or the like. Similarly, the required information is sent from the stocker 60, but the invention is not limited thereto, and the required information may be sent from the terminal of another consumer, such as the mobile equipment 80 or the like.

In the above-described embodiment, the production supply management PC 30 obtains and stores the use completion information in the storage device 40, and outputs the provided information to the stocker 60, but the invention is not limited thereto, and the use completion information may be obtained from another terminal. In addition, the obtaining of the use completion information or the outputting of the provided information may be omitted. Similarly, the stocker 60 may omit the sending of the use completion information, or may omit the displaying of the provided information. In addition, the stocker 60 can detect the mounting and the detaching of the product tray 50, but this process may be omitted. In addition, the stocker 60 is provided with the harvesting device 72, but the harvesting device 72 may be omitted. In addition, the stocker 60 is provided with the transmission/reception section 68, and is connected to the internet 18, but the transmission/reception section 68 may be omitted. In addition, the stocker 60 is provided with the operation panel 69, but the operation panel 69 may be omitted. Further, the stocker 60 obtains the information from the storage element 51, but, for example, the information may be input from the operation panel 69.

In the above-described embodiment, the product tray 50 is a carrying member, but the invention is not particularly limited thereto so long as the product P can be carried in any of the growing state, the maturing state, and the holding state. For example, the product tray 50 may be a case. Otherwise, a member which carries the product P may be omitted.

In the above-described embodiment, the products P are described as greens, but the invention is not particularly limited thereto so long as the product has a maturation time. For example, the product includes livestock, fish, and non-food plants (flowers). In addition, examples of the product with a maturation time may include processed food, such as pickles or smoked goods. At this time, the production chamber 12 or the product accommodation section 70 may employ a configuration in which the growing state, the maturing state, and the holding state can be adjusted in accordance with the product.

In the above-described embodiment, the production supply management PC 30 is connected to the production control PC 20 by the LAN 17, but the invention is not particularly limited thereto. The function of the production supply management PC 30 may be embedded in the production control PC 20, or the function of the production control PC 20 may be embedded in the production supply management PC 30.

In the above-described embodiment, the production supply management PC 30 which functions as the production supply management device of the present invention, and the stocker 60 which functions as the stocker of the present invention, are provided, but only the production supply management PC 30 may be provided, or only the stocker 60 may be provided. In addition, in the above-described embodiment, each device is described, but the invention is not particularly limited thereto, and an aspect of the production supply management method or a program thereof, or an aspect of a stocker control method or a program thereof may be employed.

### Industrial Applicability

The present invention can be used in the logistics industry as a technical field.

### Reference Signs List

10: PRODUCTION SUPPLY SYSTEM, 11: PRODUCTION FACTORY, 12, 12B, 12C: PRODUCTION CHAMBER, 13: ILLUMINATION DEVICE, 14: AIR CONDITIONING DEVICE, 15: NUTRIENT ADJUSTING DEVICE, 17: LAN, 18: INTERNET, 20: PRODUCTION CONTROL PC, 22: CPU, 23: ROM, 24: RAM, 25: STORAGE DEVICE, 26: ILLUMINATION CONTROL SECTION, 27: AIR CONDITIONING CONTROL SECTION, 28: NUTRIENT CONTROL SECTION, 30: PRODUCTION SUPPLY MANAGEMENT PC, 31: CONTROLLER, 32: CPU, 33: ROM, 34: RAM, 36: INFORMATION ACQUISITION SECTION, 37: SELECTION SECTION, 38 OUTPUT CONTROL SECTION, 40 STORAGE DEVICE, 41: MANAGEMENT INFORMATION, 42: PRODUCT INFORMATION, 43: CONSUMER INFORMATION, 44: COMMUNICATION SECTION, 45: INPUT DEVICE, 46: DISPLAY, 50: PRODUCT TRAY, 51: STORAGE ELEMENT, 52: PRODUCT INFORMATION, 53: GROWING/PLACING SECTION, 60: STOCKER, 61: CONTROLLER, 62: CPU, 63: FLASH MEMORY, 64: RAM, 65: INFORMATION ACQUISITION SECTION, 66: ENVIRONMENT ADJUSTING SECTION, 67: INFORMATION OUTPUT SECTION, 68: TRANSMISSION/RECEPTION SECTION, 69: OPERATION PANEL, 70: PRODUCT ACCOMMODATION SECTION, 71: MOUNTING SECTION, 72: HARVESTING DEVICE, 73: ILLUMINATION DEVICE, 74: AIR CONDITIONING DEVICE, 75: NUTRIENT ADJUSTING DEVICE, 76: CULTURE FLUID CARTRIDGE, 80: MOBILE EQUIPMENT, P: PRODUCT

## Claims

1. A production supply management device, comprising:
storage means for storing product management information including a product with a maturation time, and a matured time at which the product becomes mature;
information obtaining means for obtaining required information including a delivery request of the product from a terminal of a consumer;
selecting means for, based on the obtained required information of the consumer, reading the management information, and selecting the product which is currently in production and is appropriate for a predetermined delivery time which is set to be before the matured time included in the read management information; and
output control means for outputting product information including information of the selected product.

2. The production supply management device according to claim 1,
wherein the output control means outputs shipping instruction information before the delivery time so that the product is delivered in a growing state and/or a maturing state at the delivery time which is set to be before the matured time.

3. The production supply management device according to claim 1 or 2,
wherein the output control means outputs the product information including identification information which specifies the consumer, specification information which specifies the selected product, and information of the matured time of the product.

4. The production supply management device according to any one of claims 1 to 3,
wherein the information obtaining means obtains the required information including at least the identification information which specifies the consumer and the specification information which specifies the product, and further including any of a utilization time at which the product is to be used, and a desired time at which the consumer desires the delivery of the product and which is set to be before the utilization time.

5. The production supply management device according to any one of claims 1 to 4,
wherein the selecting means selects the product which is included in the obtained required information, has the matured time that is appropriate for the utilization time at which the consumer will use the product, and has not been sold.

6. The production supply management device according to any one of claims 1 to 5,
wherein the selecting means selects the product which is included in the obtained required information, has the delivery time that is appropriate for the desired time at which the consumer desires delivery, and has not been sold.

7. The production supply management device according to any one of claims 1 to 6,
wherein the output control means outputs the product information to a storage element which is attached to at least one of the product in the growing state and/or the maturing state, and a carrying member on which the product in the growing state and/or the maturing state is placed.

8. The production supply management device according to any one of claims 1 to 7,
wherein the output control means stores the management information, in which the product information is stored as order received information, in the storage means.

9. The production supply management device according to any one of claims 1 to 8,
wherein the output control means outputs change information which changes at least one of the growing state, the maturing state, and a holding state of the product, in accordance with a production situation in a production factory which produces the product and a required situation from the consumer.

10. The production supply management device according to claim 9,
wherein the output control means outputs the change information to a production control device which controls production processing of the product in the production factory.

11. The production supply management device according to any one of claims 1 to 10,
wherein the information obtaining means obtains the required information via a network from a stocker which serves as a terminal of the consumer used by the consumer, in which the product is accommodatable until the matured time, and in which at least one of the growing state, the maturing state, and the holding state of the product is controllable.

12. The production supply management device according to any one of claims 1 to 11,
wherein, when the information obtaining means has obtained use completion information indicating that the product has been used from the terminal of the consumer, the output control means stores the use completion information in the information storage means, and outputs the information regarding the delivery of the next product to the terminal of the consumer.

13. The production supply management device according to any one of claims 1 to 12,
wherein the product is a fresh product.

14. A stocker, comprising:
an accommodation section which accommodates a product with a maturation time;
an information acquisition section which obtains product information which is stored in a storage element included in at least one of the product in a growing state and/or a maturing state, and a carrying member on which the product in the growing state and/or the maturing state is placed, and includes the information of the product from the storage element, or obtains product information which includes information of the product accommodated in the accommodation section via a network from a production supply management device which performs delivery management of the product; and
an adjustment means for adjusting an environment of the accommodation section to control at least one of the growing state, the maturing state, and a holding state of the product based on the obtained product information.

15. The stocker according to claim 14, further comprising:
sending means which is connected to the network and sends the information,
wherein the sending means, when the product accommodated in the accommodation section is used, sends the use completion information indicating that the product has been used to the production supply management device which performs delivery management of the product.

16. The stocker according to claim 14 or 15, further comprising:
sending means which is connected to the network and sends the information,
wherein the accommodation section includes a mounting section on which the carrying member on which the product is placed is mounted, and
wherein the sending means, when the carrying member is detached from the mounting section, sends the use completion information indicating that the product has been used to the production supply management device which performs delivery management of the product.

17. The stocker according to any one of claims 14 to 16, further comprising:
sending means which is connected to the network and sends the information,
wherein the accommodation section includes a harvesting section which harvests the product, and
wherein the sending means, after the harvesting section is operated, sends the use completion information indicating that the product has been used to the production supply management device which performs delivery management of the product.

18. A production supply system, comprising:
the production supply management device according to any one of claims 1 to 13; and
the stocker according to any one of claims 14 to 17.

19. A production supply management method, comprising:
(a) a step of obtaining required information including a delivery request of a product with a maturation time from a terminal of a consumer;
(b) a step of, based on the obtained required information of the consumer, reading management information of the product including identification information of the product and a matured time at which the product becomes mature, and selecting the product which is currently in production and is appropriate for a predetermined delivery time which is set to be before the matured time included in the read management information; and
(c) a step of outputting product information including information of the selected product.

20. A stocker control method, comprising:
(a) a step of obtaining product information which is stored in a storage element included in at least one of the product with a maturation time in a growing state and/or a maturing state, and a carrying member on which the product in the growing state and/or the maturing state is placed, and which includes information of the product, from the storage element; or obtaining product information that includes information of the product accommodated in an accommodation section which accommodates the product via a network from a production supply management device which performs delivery management of the product; and
(b) a step of adjusting an environment of the accommodation section to control at least one of the growing state, the maturing state, and a holding state of the product based on the obtained product information.
